(19) Europäisches Patentamt
European Patent Office
Office européen des brevets

(11) EP 0 778 312 B1

(12) EUROPÄISCHE PATENTSCHRIFT

(45) Veröffentlichungstag und Bekanntmachung des Hinweises auf die Patenterteilung:
**15.03.2000 Patentblatt 2000/11**

(51) Int Cl.7: **C08K 5/41**, C08K 5/00, C08L 69/00

(21) Anmeldenummer: **96117457.0**

(22) Anmeldetag: **31.10.1996**

(54) **Gegen Gamma-Strahlung stabilisierte (Co)Polycarbonate**

(Co)polycarbonates stabilised against gamma radiation

(Co)polycarbonates stabilisés à la radiation gamma

(84) Benannte Vertragsstaaten:
**DE ES FR GB IT NL SE**

(30) Priorität: **13.11.1995 DE 19542186**

(43) Veröffentlichungstag der Anmeldung:
**11.06.1997 Patentblatt 1997/24**

(73) Patentinhaber: **BAYER AG**
**51368 Leverkusen (DE)**

(72) Erfinder:
- **Ebert, Wolfgang, Dr.**
  **47800 Krefeld (DE)**
- **Hufen, Ralf**
  **47239 Duisburg (DE)**
- **Pantke, Heidemarie, Dr.**
  **40882 Ratingen (DE)**
- **Berg, Klaus, Dr.**
  **47798 Krefeld (DE)**

(56) Entgegenhaltungen:
**US-A- 4 303 759**
**US-A- 4 403 054**
**US-A- 4 407 996**
**US-A- 4 880 855**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft gegen die verfärbende Wirkung der γ-Strahlung stabilisierte (Co)-Polycarbonate auf Basis von Diphenolen und einem oder mehreren Stabilisatoren.

Gegenstand der Erfindung sind Polycarbonatformmassen enthaltend

a) 97,5 Gew.-% bis 99,9 Gew.-% eines Polycarbonates oder Copolycarbonates und

b) 0,1 Gew.-% bis 2,5 Gew.-% eines γ-Stabilisators der allgemeinen Formel (I), bezogen jeweils auf 100 Gew.-% aus a) + b),

$$R_1\text{-}X\text{-}(CHR_4)_n\text{-}Y\text{-}R_2 \qquad (I)$$

worin
$R_1$, $R_2$ und $R_4$ für $C_1$-$C_{36}$ gegebenenfalls verzweigte Alkylgruppen, bevorzugt $C_1$-$C_{12}$ gegebenenfalls verzweigte Alkylgruppen bzw. $C_{16}$-$C_{24}$ gegebenenfalls verzweigte Alkylgruppen, $C_7$-$C_{18}$ gegebenenfalls verzweigte und/oder substituierte Alkylaryl-Reste oder Aralkyl-Reste oder $C_6$-$C_{18}$, bevorzugt $C_6$, gegebenenfalls substituierte Aryl-Reste stehen und $R_4$ auch H sein kann, und worin "n" eine ganze Zahl zwischen 1 und 8, vorzugsweise 1 ist, und worin

X = 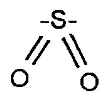

und

y = 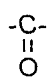 , 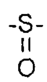 , 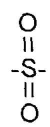 ,

und Y auch für -S- stehen kann.

Geeignet sind auch solche Reste $R_1$ und $R_2$, die Teil eines 4 bis 12-gliedrigen, bevorzugt 5- oder 6-gliedrigen, durch die Gruppen X bzw. Y gegebenenfalls heterocyclischen Ringsystems sind, wobei hierbei $R_1$ oder $R_2$ eine Einfachbindung sein kann.

Besonders bevorzugte Verbindungen (I) sind solche, in denen

X 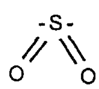

ist und

Y 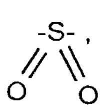 , -S- , 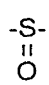 , oder 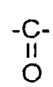

Als weiterer Stabilisator können c) 0,05 Gew.-% bis 5 Gew.-%, bevorzugt 0,1 Gew.-% bis 1,5 Gew.-% gegebenenfalls endverkapptes und/oder verzweigtes Polypropylenglykol mit einem mittleren Molekulargewicht von 200 bis 200.000, bevorzugt 800 bis 4.000 in den erfindungsgemäßen Polycarbonatformmassen enthalten sein, wobei sich die Gewichtsprozente von c) jeweils auf 100 Gew.-% a) + b) beziehen.

Der Stand der Technik in der Stabilisierung gegen γ-Strahlen besteht in einer Ausrüstung des Polycarbonates mit oligomeren Polypropylenglykolen (EP 376 289), oligomeren bromierten Bisphenol A-Polycarbonaten (EP 114 973), Blends aus Polycarbonat und Polyestern auf Basis von Terephthalsäure und Cyclohexandimethanol (EP 152 012), organischen Disulfiden (US-PS 5 382 605 (Mo 3788)) oder organischen Monosulfiden (EP-0 611 797 (Mo 3913 + Mo 3960)), jeweils gegebenenfalls in Kombination mit oligomeren Polypropylenglykolen.

Nachteilig an diesen Stabilisatoren sind z.B. beim Polypropylenglykol alleine die unzureichende Stabilisierung bei höheren Strahlungsdosen, beim bromierten System die mangelhafte Einsetzbarkeit aufgrund des Halogenanteils, bei der Verwendung der Polyesterblends die fehlende Fähigkeit zur Heißdampfsterilisation und beim Disulfidsystem das kleine Verarbeitungsfenster bevor Zersetzung auftritt.

Bei der Verwendung des Monosulfidsystems gemäß EP-0 611 797 dagegen sind ebenso wie beim Disulfidsystem Geruchsbelästigungen nicht auszuschließen.

Die Aufgabe bestand daher darin, ein Additivsystem zu entwickeln, das unter Herstellungs-und Verarbeitungsbedingungen stabil ist, zu Heißdampf-sterilisierbaren Formkörpern führt, um eine universelle Einsetzbarkeit zu garantieren, keine Halogen-haltigen Stabilisatoren verwendet und eine ausreichende Stabilisierung bei Bestrahlung mit 5 Mrad garantiert.

Die Aufgabe wurde durch den erfindungsgemäßen Zusatz des Stabilisators (I) gelöst.

Für die Herstellung der erfindungsgemäß einzusetzenden Polycarbonate geeignete Diphenole sind solche der allgemeinen Formel (II)

$$HO\text{-}Z\text{-}OH \qquad (II)$$

mit vorzugsweise 6 bis 30 C-Atomen sind sowohl einkernige, als auch mehrkernige Diphenole, die Heteroatome enthalten können und unter den Bedingungen der Polycarbonatherstellung und deren thermischer Bestrahlung inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -sulfoxide, -sulfone und α,α-Bis-(hydroxyphenyl)-diisopropylbenzole, sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050, sowie in der Monographie "H. Schnell, Chemistry and Physics of Polycarbonates, Interscience Publishers, New York, 1964" beschrieben.

Bevorzugte Diphenole sind 4,4'-Dihydroxydiphenyl, 2,2-Bis-(4-hydroxyphenyl)propan, 2,4-Bis-(4-hydroxyphenyl)-2-methylbutan, 1,1-Bis-(4-hydroxyphenyl)cyclohexan, α,α-Bis-(4-hydroxyphenyl)-p-diisopropylbenzol, α,α-Bis-(4-hydroxyphenyl)-m-diisopropylbenzol, 2,2-Bis-(3-methyl-4-hydroxyphenyl)-propan, 2,2-Bis(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis(3,5-dimethyl-4-hydroxyphenyl)-cyclohexan, α,α-Bis-(3,5-dimethyl-4-hydroxyphenyl)-p-diisopropylbenzol, 1,1-Bis-(4-hydroxyphenyl)-3,3,5-trimethylcyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-1-phenyl-ethan, 2,2-Bis-(3,5-dimethyl-4-hydroxyphenyl)-2-phenyl-ethan, 2,2-Bis-(4-hydroxyphenyl)-2,2-diphenyl-ethan, 9,9-Bis(4-hydroxyphenyl)-fluoren, 9,9-Bis-(3,5-dimethyl-4-hydroxyphenyl)-fluoren.

Besonders bevorzugte Diphenole sind z.B. 2,2-Bis-(4-hydroxyphenyl)-propan, 2,2-Bis-(3,5-dimethyl-4-hydroxyphenyl)-propan, 1,1-Bis-(4-hydroxyphenyl)-cyclohexan, 1,1-Bis-(4-hydroxyphenyl)-1-phenyl-ethan, 1,1-Bis-(4-hydroxyphenyl)-3,3,5-trimethylcyclohexan, 1,1-Bis-(4-hydroxyphenyl)-3-methylcyclohexan, 1,1-Bis-(4-hydroxyphenyl)-4-methylcyclohexan, 9,9-Bis-(3,5-dimethyl-4-hydroxyphenyl)fluoren.

Insbesondere sind 2,2-Bis-(4-hydroxyphenyl)-propan, 1,1-Bis-(4-hydroxyphenyl)-3,3,5-trimethylcyclohexan und 1,1-Bis-(4-hydroxyphenyl)-1-phenylethan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise bei der Synthese mitverwendet werden. Einige der verwendbaren Verbindungen sind beispielsweise 1,3,5-Tris-(4-hydroxyphenyl)-benzol, 1,3,5-Tris-(4-(4-hydroxyphenylisopropyl)-phenyl)-benzol, 1,1,1-Tris-(4-hydroxyphenyl)-ethan, 2,6-Bis-(2-hydroxy-5'-methyl-benzyl)-4-methylbenzol, 2-(4-Hydroxyphenyl)-2-(2,4-dihydroxyphenyl)-propan, Hexakis-(4-(4-hydroxyphenylisopropyl)-phenyl)-orthoterephthalsäureester, Tetrakis-(4-hydroxyphenyl)-methan, 1,1-Bis-((4',4"-dihydroxytriphenyl)-methyl)-benzol, 3,3-Bis-(4-hydroxyphenyl)-2-oxo-2,3-dihydroindol, 3,3-Bis-(4-hydroxy-3-methyl-phenyl)-2-oxo-2,3-dihydroindol, ferner geeignet sind die diesen Verbindungen entsprechenden Chlorkohlensäureester, sowie die Säuren oder bevorzugt die Säurechloride von mehr als 2-basigen aliphatischen oder aromatischen Carbonsäuren, also beispielsweise 2,4-Dihydroxybenzoesäure bzw. 2,4-Dihydroxybenzoesäuredichlorid, Trimesinsäure bzw. Trimesinsäuretrichlorid, Trimellithsäure bzw. Trimellithsäuretrichlorid, Cyanursäuretrichlorid, wobei diese Verzweiger einzeln oder im Gemisch vorgelegt oder der Synthese portionsweise zugesetzt werden können.

Als Kettenabbrecher können in der Synthese Phenole, gegebenenfalls substituierte Phenole, deren Chlorkohlensäureester, Monocarbonsäuren, sowie deren Säurechloride, bevorzugt Cumylphenol, Phenol, tert.-Butylphenol und i-Octylphenol gegebenenfalls als Mischungen, mit den üblichen Verunreinigungen und Isomeren verwendet werden, wobei die Kettenabbrecher einzeln oder im Gemisch mit den Diphenolen vorgelegt oder der Synthese portionsweise zugesetzt werden können.

Die Herstellung der erfindungsgemäß einzusetzenden Polycarbonate bzw. Polycarbonatgemische kann im wesentlichen nach folgenden drei bekannten Methoden (vgl. H. Schnell, "Chemistry and Physics of Polycarbonates", Polymer Review, Vol. IX, Seite 27 ff., Interscience Publishers, New York, 1964) erfolgen:

1. Nach dem Lösungsverfahren in disperser Phase, dem sogenannten "Zweiphasengrenzflächenverfahren".

2 .Nach dem Lösungsverfahren in homogener Phase, auch "Pyridinverfahren" genannt.

3. Nach dem Schmelzumesterungsverfahren.

Die erfindungsgemäß einzusetzenden Polycarbonate haben mittlere Gewichtsmittelmolekulargewichte $\overline{M}w$ (ermittelt durch Messung der relativen Viskosität in $CH_2Cl_2$ bei 25°C und einer Konzentration von 0,5 g in 100 ml $CH_2Cl_2$) zwischen 10.000 und 80.000, vorzugsweise zwischen 15.000 und 40.000.

Den erfindungsgemäßen Polycarbonatformmassen können vor, während oder nach ihrer Verarbeitung die für thermoplastische Polycarbonate üblichen Additive, wie Stabilisatoren, so z.B. Thermostabilisatoren, wie beispielsweise organische Phosphite, gegebenenfalls in Kombination mit monomeren oder oligomeren Epoxiden, UV-Stabilisatoren, insbesondere solchen auf Basis von Stickstoffhaltigen Heterocyclen, wie Triazolen, optischen Aufhellern, Flammschutzmitteln, insbesondere Fluor-haltigen, wie perfluorierte Salze organischer Säure, Polyperfluorethylen, Salzen organischer Sulfonsäuren und deren Kombinationen, gegebenenfalls anderen Entformungsmitteln, Farbmitteln, Pigmenten, Antistatika, Füllstoffen und Verstärkungsstoffen in den üblichen Mengen zugesetzt werden.

Bevorzugte γ-Stablisatoren der Formel (I) sind insbesondere solche der Formel (Ia)

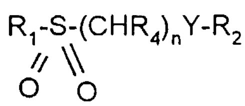

(Ia)

mit $R_1$ und $R_2$ unabhängig voneinander für Methyl, Ethyl, i/n-Propyl, i/n/tert.-Butyl, i/n-Pentyl, Ethylhexyl, Cyclopentyl, Cyclohexyl, Stearyl, Palmityl, Benzyl, Phenyl, Kresyl und Myristyl,

mit $R_4$ für H, $CH_3$, Benzyl und Phenyl,

mit Y für $-SO_2-$, -S-, -SO-, -CO- und

mit n = 1 oder 2.

Besonders bevorzugt sind insbesondere solche Verbindungen des Typs (Ia), in denen $R_1$ und $R_2$ unabhängig voneinander Methyl, Phenyl oder Benzyl bedeuten, $R_4$ = H oder $CH_3$ ist, Y für $-SO_2-$ oder -CO- steht und n = 1 ist.

Die Stabilisatoren (I) bzw. (Ia) sind entweder bekannt und in einschlägigen Nachschlagwerken wie dem Beilstein oder den Chemical Abstracts beschrieben oder können durch bekannte Synthesevorschriften beispielsweise für 1,3-Dicarbonylverbindungen oder Sulfonsäure- bzw. Sulfonverbindungen synthetisiert werden.

Beispielhaft seien die folgenden Literaturquellen genannt:

Römpp: "Lexikon der Chemie", 9. Auflage, Bd. 5, Seite 4384;
Houben-Weyl: 9, Seiten 223 ff., E11, Seiten 1132-1299;

Kharash: "Organic Sulphur Compounds", Bd. 1, Seiten 617 ff.;
Patai: "The Chemistry of Sulphones and Sulphoxides", Seiten 165 ff., 232ff; 1988 J. Wiley & Sons,
Winnacker-Küchler: (3.) 4, Seiten 166 ff.
Beilstein Bände 6, I 6, II 6, insbesondere Seiten 305, 426, 456, 868, I 226, I 408, II 430, II 829 und II 854.

Beispiele für Stabilisatoren (I) sind

a) 1,3-Dicarbonylverbindungen wie beispielsweise die Dimethyl-, Diethyl-, Di-i/n-propyl-, Di-i/n/tert.-butyl-, Di-i/n-pentyl-, Dicyclopentyl-, Dicyclohexyl-, Distearyl-, Dimyristyl-, Dipalmityl-, Dibenzyl-, Diphenylester der Malonsäure sowie die Meldrum'sche Säure und deren höhere Homologe auf Basis anderer Ketone.

b) Die Methyl-, Ethyl-, i/n-Propyl-, i/n/tert.-Butyl-, i/n-Pentyl-, Ethylhexyl-, Cyclopentyl-, Cyclohexyl-, Stearyl-, Myristyl-, Palmityl-, Benzyl-, Phenylester, Kresylester von gegebenenfalls substituierten Acetessigsäuren.

c) Ester der unter a) genannten Carbonsäuren, wobei eine oder beide Carboxylgruppen durch Sulfonsäuregruppen ersetzt werden.

d) Die Sulfonsäureanalogen der unter b) genannten Acetessigsäureester.

e) Die unter b) und d) genannten Verbindungen nach Austausch der Carbonylgruppe gegen $SO_2$.

f) 1,3-Diketone wie z.B. 1,3-Pentandion.

Eingesetzt werden die genannten Stabilisatoren einzeln oder in beliebigen Gemischen, in Konzentrationen von 0,1 Gew.-% bis 2,5 Gew.-%, wobei die Zugabe in Substanz, als Pulver oder Schmelze oder aber als Lösung vor oder während der Aufarbeitung des Polycarbonatharzes, aber auch in einem anschließenden Compoundierschritt erfolgen kann. Als Lösungsmittel für (I) kann beispielsweise Dichlormethan und/oder Chlorbenzol dienen.

Dabei kann es vorteilhaft sein, wenn die Formmassen neben den genannten Stabilisatoren, noch Polypropylenglykole in Mengen von 0,05 Gew.-% bis 5 Gew.-%, bevorzugt 0,1 Gew.-% bis 1,5 Gew.-% gegebenenfalls endverkapptem und/oder verzweigtem Polypropylenglykol mit einem mittleren Molekulargewicht von 200 bis 200.000, bevorzugt 800 bis 4.000 enthalten. Derartige Polypropylenglykole sind literaturbekannt. Zur Beseitigung gelegentlich auftretender leichter Gelbfärbungen ist es unter Umständen sinnvoll die Formmassen darüber hinaus mit den für Polycarbonat üblichen Phosphor-haltigen Stabilisatoren auszurüsten.

Die erfindungsgemäßen Polycarbonate können zu Förmkörpern verarbeitet werden, indem man, beispielsweise, die in bekannter Weise isolierten Polycarbonate zu Granulat extrudiert und dieses Granulat, gegebenenfalls nach Zusatz der obengenannten Additive, durch Spritzguß zu verschiedenen Artikeln in bekannter Weise verarbeitet.

Die erfindungsgemäßen Polycarbonate sind als Formkörper überall dort einsetzbar, wo die bislang für diesen Zweck bekannten Polycarbonate eingesetzt werden, besonders jedoch im medizinischen Anwendungsbereich, also z.B. für Dialysatorgehäuse.

Gegenstand der vorliegenden Erfindung ist somit auch die Verwendung der erfindungsgemäßen Polycarbonatformmassen zur Herstellung von Gegenständen für medizinische Anwendungen.

Den erfindungsgemäßen Polycarbonaten können, für meist nicht transparente Anwendungen, noch andere Thermoplaste in üblichen Mengen, d.h zwischen 10 Gew.-% und 50 Gew.-%, bezogen auf das erfindungsgemäße Polycarbonat, zugemischt werden.

Geeignete andere Thermoplaste sind beispielsweise aromatische Polyestercarbonate, Polycarbonate auf Basis anderer Bisphenole als die erfindungsgemäßen Polycarbonate, Polyalkylenterephthalate, EPDM-Polymerisate, Polystyrol und Co- und Pfropfcopolymerisate auf Basis Styrol wie insbesondere ABS.

## Beispiele

Zur Herstellung der Probekörper wurde ein additivfreies, unstabilisiertes Polycarbonat mit einem mittleren Molekulargewicht von ca. 30.000 (Mw nach GPC), Lösungsviskosität: $\eta$ = 1,293 bei 300°C auf einem Zweiwellenextruder mit der angegebenen Menge Stabilisator compoundiert und anschließend granuliert. Aus diesem Granulat werden anschließend Farbmusterplättchen abgespritzt (Dicke 4 mm). Der Yellowness-Index dieser Plättchen wird von der Bestrahlung bestimmt (Hunter-Lab-Gerät), anschließend werden diese Probekörper bestrahlt (Dosis: 5 Mrad; Co-Bombe), 10 Tage im Dunkeln gelagert und wieder der YI bestimmt. Aus der Differenz der beiden Messungen, vor und nach der Bestrahlung, wird der zur Beurteilung verwendete $YI_{Diff}$ ermittelt.

a) Vergleichsversuche:

| Verbindung | Konz. (Gew.-%) | $YI_{Anfang}$ | $YI_{bestrah}$ | $YI_{Diff}$ |
|---|---|---|---|---|
| $Polycarbonat_{reextr.}$ | - | 6,31 | 48,88 | 42,57 |
| | - | 6,27 | 48,07 | 41,80 |
| Polypropylenglykol | 0,75 | 4,8 | 29,24 | 24,66 |
| | 0,75 | 4,70 | 30,07 | 25,37 |
| Distearyldisulfid | 0,50 | 10,47 | 25,93 | 15,46 |
| | 0,50 | 10,16 | 25,70 | 15,54 |

b) Erfindungsgemäß (Bestrahlungsdosis: 5 Mrad)

| Verbindung | Konz. (Gew.-%) | $YI_{Anfang}$ | $YI_{bestrah}$ | $YI_{Diff}$ |
|---|---|---|---|---|
| Beispiel 1: | | | | |
| Verbindung A | 0,5 | 3,6 | 9,9 | 6,3 |
| Verbindung B | 0,5 | 5,3 | 13,1 | 7,8 |
| Vergleichsversuch C | 0,5 | 7,6 | 19,5 | 11,9 |
| Verbindung D | 0,5 | 6,5 | 12,0 | 5,5 |

Alle Beispiele enthielten zusätzlich 0,75 Gew.-% Polypropylenglykol MG ca. 2000.

Verbindung A: Phenyl-$SO_2$-$CH_2$-$SO_2$-Phenyl
Verbindung B: Phenyl-CO-$CH_2$-$SO_2$-Phenyl
Vergleichsversuch C: Dibenzylsulfon
Verbindung D:

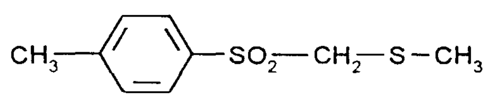

Erfindungsgemäß (Bestrahlungsdosis: 3 Mrad)

| Verbindung | Konz. (Gew.-%) | $YI_{Anfang}$ | $YI_{bestrath}$ | $YI_{Diff}$ |
|---|---|---|---|---|
| Beispiel 2 | | | | |
| Verbindung B | 0,5 | 5,3 | 11,4 | 6,1 |
| Verbindung D | 0,5 | 6,5 | 10,3 | 3,8 |

Alle Beispiele enthielten zusätzlich 0,75 Gew.-% Polypropylenglykol MG ca. 2000.

Verbindung B: Phenyl-CO-$CH_2$-$SO_2$-Phenyl

Verbindung D:

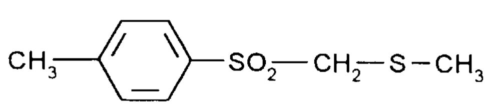

## Patentansprüche

**1.** Polycarbonatformmassen enthaltend

a) 97,5 Gew.-% bis 99,9 Gew.-% eines Polycarbonates oder Copolycarbonates und

b) 0,1 Gew.-% bis 2,5 Gew.-% eines γ-Stabilisators der allgemeinen Formel (I), bezogen jeweils auf 100 Gew.-% aus a) + b),

$$R_1\text{-}X\text{-}(CHR_4)_n\text{-}Y\text{-}R_2 \qquad \text{(I)}$$

in der
$R_1$, $R_2$, und $R_4$ für $C_1$-$C_{36}$ gegebenenfalls verzweigte Alkylgruppen, $C_7$-$C_{18}$ gegebenenfalls verzweigte und/oder substituierte Alkylaryl-Reste oder Aralkyl-Reste oder $C_6$-$C_{18}$, gegebenenfalls substituierte Aryl-Reste stehen und $R_4$ auch H sein kann, und worin "n" eine ganze Zahl zwischen 1 und 8 ist, und worin

X 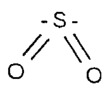 ist und Y 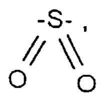, -S-, 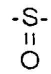, oder 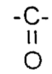

ist.

**2.** Formmassen gemäß Anspruch 1, dadurch gekennzeichnet, daß sie zusätzlich c) 0,05 Gew.-% bis 5 Gew.-%, gegebenenfalls endgruppenverkappte und/oder verzweigte Polypropylenglykole enthalten, mit einem mittleren Molekulargewicht von 200 bis 200.000, wobei sich die Gewichtsprozente von c) jeweils auf 100 Gew.-% a) + b) beziehen.

**3.** Formmassen gemäß Anspruch 1 und 2, dadurch gekennzeichnet, daß die Polycarbonate auf Basis von 2,2-Bis-(4-hydroxyphenyl)-propan, 1,1-Bis-(4-hydroxyphenyl)-3,3,5-trimethylcyclohexan und 1,1-Bis-(4-hydroxyphenyl)-1-phenyl-ethan oder deren Mischungen synthetisiert wurden.

**4.** Polycarbonatformmassen gemäß Anspruch 1 und 2, dadurch gekennzeichnet, daß die Reste $R_1$ und $R_2$ Teil eines 4- bis 12-gliedrigen durch die Gruppen X bzw. Y, gegebenenfalls heterocyclischen Ringsystems sind, wobei hierbei $R_1$ oder $R_2$ eine Einfachbindung sein kann.

**5.** Polycarbonatformmassen gemäß Anspruch 1 und 2, dadurch gekennzeichnet, daß der γ-Stabilisator der Formel (Ia) entspricht,

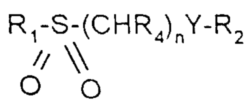 (Ia)

mit $R_1$ und $R_2$ unabhängig voneinander für Methyl, Ethyl, i/n-Propyl, i/n/tert.-Butyl, i/n-Pentyl, Ethylhexyl, Cyclopentyl, Cyclohexyl, Stearyl, Palmityl, Benzyl, Phenyl, Kresyl und Myristyl,

mit $R_4$ für H, $CH_3$, Benzyl und Phenyl,

mit Y für $-SO_2-$, -S-, -SO-, oder -CO- und

mit n = 1 oder 2.

**6.** Polycarbonatformmassen gemäß Anspruch 8, dadurch gekennzeichnet, daß in (Ia) $R_1$ und $R_2$ unabhängig voneinander Methyl, Phenyl oder Benzyl bedeuten, $R_4$ = H oder $CH_3$ ist, Y für $-SO_2-$ oder -CO- steht und n = 1 ist.

**7.** Verwendung der Polycarbonatformmassen der Ansprüche 1 bis 9 zur Herstellung von Gegenständen für medizinische Anwendungen.

**Claims**

**1.** Polycarbonate moulding compositions containing

a) 97.5 wt.% to 99.9 wt.% of a polycarbonate or copolycarbonate and

b) 0.1 wt.% to 2.5 wt.% of γ-radiation stabiliser of the general formul (I), each with reference to 100 wt.% of a) + b),

$$R_1\text{-}X\text{-}(CHR_4)_n\text{-}Y\text{-}R_2 \qquad \text{(I)}$$

in which

$R_1$, $R_2$ and $R_4$ represent $C_1$-$C_{36}$ optionally branched alkyl groups, $C_7$-$C_{18}$ optionally branched and/or substituted alkylaryl or arylalkyl groups or $C_6$-$C_{18}$, optionally substituted aryl groups and $R_4$ may also represent H, and in which n is a whole number between 1 and 8, and if if $R_1$ = $R_2$ = benzyl and Y is a single bond, may also be zero, and wherein X is

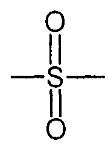

and Y, independently of each other, are

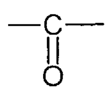 , 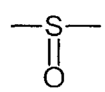 or 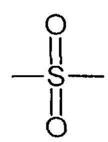 ,

and Y may also represent -S-.

**2.** Moulding compositions according to claim 1, characterised in that they also contain c) 0.05 wt.% to 5 wt.% of optionally terminally capped and/or branched polypropylene glycols with an average molecular weight of 200 to 200,000, wherein the percentages by weight of c) are each with reference to 100 wt.% of a) + b).

**3.** Moulding compositions according to claims 1 and 2, characterised in that the polycarbonates have been synthesised from 2,2-bis-(4-hydroxyphenyl)propane, 1,1-bis-(4-hydroxyphenyl)-3,3,5-trimethylcyclohexane or 1,1-bis-(4-hydroxyphenyl)-1-phenylethane or mixtures thereof.

**4.** Polycarbonate moulding compositions according to claims 1 and 2, characterised in that the groups $R_1$ and $R_2$ may be part of a 4 to 12-membered optionally heterocyclic ring system, via the groups X and Y, wherein in this case $R_1$ or $R_2$ may be a single bond.
Polycarbonate moulding compositions according to claims 1 and 2, characterized in that X and/or Y represent

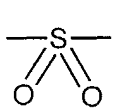 , 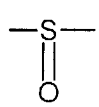 , 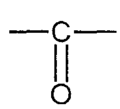 or 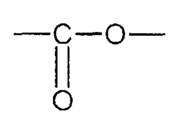 .

Polycarbonate moulding compositions according to claims 1 and 2, characterised in that X or Y represents a single bond or Y = -S-,
Polycarbonate moulding compositions according to claims 1 and 2, characterised in that

X is 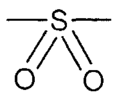 and Y is 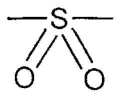, 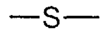, 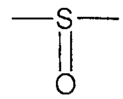, 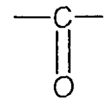

or a single bond.

**5.** Polycarbonate moulding compositions according to claims 1 and 2, characterized in that the $\gamma$-stabiliser corresponds to the formula (Ia)

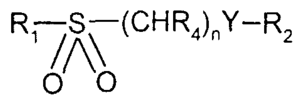

(Ia)

where

$R_1$ and $R_2$, independently, represent methyl, ethyl, i/n-propyl, i/n/tert-butyl, i/n-pentyl, ethylhexyl, cyclopentyl, cyclohexyl, stearyl, palmityl, benzyl, phenyl, cresyl and myristyl,

$R_4$ represents H, $CH_3$, benzyl and phenyl,

Y represents $-SO_2-$, -S-, -SO- or -CO- and

n= 1 or 2.

**6.** Polycarbonate moulding compositons according to claim 5, characterised in that in (Ia) $R_1$ and $R_2$, independently, represent methyl, phenyl or benzyl, $R_4$ = H or $CH_3$, Y represents $-SO_2-$ or -CO- and n = 1.

**7.** Use of the polycarbonate moulding compositions according to Claims 1 to 6 for producing items for medical applications.

**Revendications**

**1.** Matières à mouler en polycarbonate contenant

a) 97,5% en poids à 99,9% en poids d'un polycarbonate ou copolycarbonate et

b) 0,1% en poids à 2,5% en poids - pour 100% en poids de a) + b) - d'un stabilisant contre les rayonnements y, répondant à la formule générale (I)

$$R_1\text{-}X\text{-}(CHR_4)_n\text{-}Y\text{-}R_2 \quad (I)$$

dans laquelle
$R_1$, $R_2$ et $R_4$ représentent des groupes alkyles en $C_1$-$C_{36}$ éventuellement ramifiés, des groupes alkylaryles ou aralkyles en $C_7$-$C_{18}$ éventuellement ramifiés et/ou substitués ou des groupes aryles en $C_6$-$C_{18}$ éventuel-

lement substitués, $R_4$ pouvant également représenter II, n est un nombre entier allant de 1 à 8 et qui peut également être égal à 0 lorsque $R_1$ = $R_2$ benyzle et que Y représente une liaison simple, et X représentent

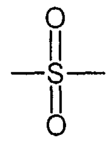

et Y représentent chacun, indépendamment l'un de l'autre.

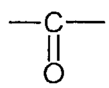 , 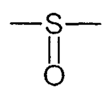 ou 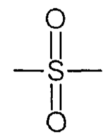 ,

Y pouvant également représenter -S-.

**2.** Matières à mouler selon revendication 1, caractérisées en ce qu'elles contiennenet en outre c) de 0,05% en poids à 5% en poids de polypropylèneglycols éventuellement ramifiés et/ou à groupes terminaux bloqués, à un poids moléculaire moyen de 200 à 20 000, les pourcentages indiqués pour c) se rapportant dans chaque cas à 100% en poids de a)+ b).

**3.** Matières à mouler selon les revendications 1 et 2, caractérisées en ce que les polycarbonates ont été préparés à base du 2,2-bis-(-hydroxyphényl)-propane, du 1,1-bis-(4-hydroxyphényl)-3,3,5-triméthylcyclohexane ou du 1,1-bis-(4-hydroxyphényl-1-phényléthane ou de leurs mélanges.

**4.** Matières à mouler en polycarbonate selon les revendications 1 et 2, caractérisées en ce que $R_1$ et $R_2$ constituent une partie d'un système cyclique de 4 à 12 chaînons éventuellement hétérogène par les groupes X ou Y, $R_1$ ou $R_2$ pouvant alors représenter une liaison simple.

**5.** Matières à mouler en polycarbonate selon les revendications 1 et 2, caractérisées en ce que le stabilisant contre les rayonnements $\gamma$ répond à la formule particulière (Ia)

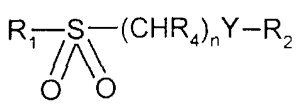 (Ia)

dans laquelle

| | |
|---|---|
| $R_1$ et $R_2$ | représentent chacun, indépendamment l'un de l'autre, un groupe méthyle, éthyle, i/n-propyle, i/n/tert-butyle, i/n-pentyle, éthylhexyle, cyclopentyle, cyclohexyle, stéaryle, palmityle, benzyle, phényle, crésyle ou myristyle, |
| $R_4$ | représente H, $CH_3$, un groupe benzyle ou phénynle, |
| Y | représente -$SO_2$- -S-, -SO-, -CO- ou une liaison simple et |
| n = | 1 ou 2. |

**6.** Matières à mouler en polycarbonate selon revendication 5, caractérisées en ce que, dans la formule (Ia), $R_1$ et $R_2$ représentent chacun, indépendamment l'un de l'autre, un groupe méthyle, phényle ou benzyle, $R_4$ = H ou $CH_3$, Y

représente $-SO_2-$ ou -CO- et n = 1.

**7.** Utilisation des matières à mouler en polycarbonate des revendications 1 à 6 pour la fabricatin d'objets destinés à des applicatins médicales.